# EUROPÄISCHE PATENTSCHRIFT

(11) **EP 0 514 371 B1**
(45) Veröffentlichungstag und Bekanntmachung des Hinweises auf die Patenterteilung: **27.11.1996**
(21) Anmeldenummer: 92890117.2
(22) Anmeldetag: 15.05.1992
(51) Int. Cl.: A22C 9/00, A47J 43/046

(54) **Einrichtung zum Behandeln von frischem Fleisch**
Device for the treatment of fresh meat
Dispositif pour le traitement de viande fraîche

(30) Priorität: 15.05.1991 AT 1004/91
(43) Veröffentlichungstag der Anmeldung: 19.11.1992
(73) Patentinhaber: SOLICH GESELLSCHAFT m.b.H, A-1140 Wien (AT)
(72) Erfinder: Solich, Karl, A-1140 Wien (AT)
(74) Vertreter: Haffner, Thomas M., Dr.

(56) Entgegenhaltungen:
- EP-A- 0 043 773
- EP-A- 0 367 968
- EP-A- 0 391 492
- DE-A- 2 529 970
- DE-A- 2 749 667
- DE-A- 3 811 754
- GB-A- 898 976
- GB-A- 2 085 742

## Beschreibung

Die Erfindung bezieht sich auf eine einfache Einrichtung zum Behandeln von frischem Fleisch und Geflügelteilen, wie z.B. Massieren oder Marinieren mit einem Behandlungsbehälter.

Aus der DE-OS 20 56 048 ist beispielsweise ein Verfahren zum Pökeln oder Salzen von Fleischstücken bekanntgeworden, bei welchem eine trommelartige Einrichtung eingesetzt wird, welche um ihre Achse in Rotation versetzt wird. Im Inneren der Trommel befinden sich Kühlrohre und am Innenmantel sind Mitnehmer angeordnet. Bei Rotation des trommelförmigen Behälters wird der Inhalt der Trommel angehoben und je nach Befüllungsgrad über eine mehr oder minder große Höhe wiederum abgeworfen. Die Einrichtung ist in erster Linie für stückig geschnittenes Fleisch geeignet. Im Falle des Einsatzes von Schnitzel ist mit einer mehr oder minder starken Zerstörung der Struktur und der Form der Fleischstücke zu rechnen.

Für die Behandlung von Fleischstücken sind weiters aus der EP-A1-0 391 492 Autoklaven mit rotierenden, geknickten Mitnehmern bekannt, bei welchen das zu behandelnde Fleisch unter Druck nach oben gefördert wird und dann entlang des als Schneckenförderer ausgebildeten Mitnehmers in dem Autoklav nach unten transportiert wird, wodurch ein Massageeffekt erzielt werden soll. Alle bekannten Einrichtungen setzen entsprechende konstruktive Maßnahmen voraus und sind nicht ohne weiteres geeignet als einfaches Haushaltszusatzgerät eingesetzt zu werden.

Die Erfindung zielt nun darauf ab eine Einrichtung der eingangs genannten Art zu schaffen, bei welcher mit konventionellen einfachen Behältern das Auslangen gefunden werden kann, wobei die Einrichtung prinzipiell auch so ausgebildet werden kann, daß sie sich als einfaches Zusatzgerät für konventionelle Küchenmaschinen eignet. Zur Lösung dieser Aufgabe besteht die Erfindung im wesentlichen darin, daß der Behälter an seinem Boden wenigstens eine relativ zum Behälter rotierbar gelagerte Schaufel aufweist, welche über eine außerhalb des Behälters angeordnete Kupplung mit einem Drehantrieb verbindbar ist und daß die Schaufel unter einem spitzen Winkel an den Boden des Behälters anschließt, daß die Antriebswelle für die Schaufel(n) den Boden und/oder einen Deckel des Behälters dichtend durchsetzt und daß an der Innenwand des Behälters Noppen, Rippen oder Leitflächen angeordnet sind. Die Verwendung wenigstens einer, relativ zum Behälter rotierbar gelagerten Schaufel erlaubt hiebei beliebige Fleischstücke und insbesondere auch Schnitzel schonend anzuheben. Nach dem Aufnehmen derartiger Fleischstücke vom Boden des Behälters gelangen diese unter Friktion an der Oberfläche der Schaufel bis zur Oberkante der Schaufel und fallen in der Folge über eine exakt definierte vorbestimmte Höhe wieder auf den Grund des Behälters zurück. Gleichzeitig können die Fleischstücke beim Herabfallen von der Oberkante der Schaufel gewendet werden, wobei durch das Auftreffen der Fleisch- oder Geflügelstücke nach dem Fall über eine vorbestimmte Höhe ein definierter Massageeffekt erzielt wird. Wenn beispielsweise am Boden des Behälters eine gekühlte Marinade oder Gewürzlake eingebracht ist, wird durch das Auftreffen der herabfallenden Fleischstücke eine gute Penetration der gegebenenfalls gewürzten Marinade bzw. Salzlake durch die Oberfläche der Fleischstücke gewährleistet. Nach einer derartigen Vorbehandlung bleiben die so behandelten Fleischstücke erheblich länger saftig, und haben in den nächsten Tagen keinen nennenswerten Feuchtigkeitsverlust sowie eine längere Lagerfähigkeit, wobei die Garzeit aufgrund der mechanischen Vorbehandlung verringert wird. Wesentlich hiebei ist das schonende Anheben durch am Boden anschließende Schaufeln, welche unter einem spitzen Winkeln an den Boden des Behälters anschließen, wobei durch die Maßnahme, daß die Schaufeln über eine außerhalb des Behälters angeordnete Kupplung, welche insbesondere als Ruschkupplung ausgebildet sein kann, mit einem Drehantrieb verbindbar sind, in einfacher Weise eine Adaptierbarkeit an konventionelle Küchenmaschinen gegeben ist. Das Anheben der Fleischstücke über wenigstens eine spitzwinkelig an den Boden des Behältes anschließende rotierende Schaufel stellt hiebei gleichzeitig sicher, daß die Fleischstücke in ihrer Struktur nicht zerstört werden und insbesondere nicht in kleinere Stücke zerrissen werden. Durch den Einbau von beispielsweise zwei Schaufeln gelingt es, das Fleisch noch schonender zu behandeln und insbesondere ein Zereissen der Faserstruktur des Fleisches zu vermeiden. Durch eine derartige Behandlung wird eine Qualitätsverbesserung von Fleisch- und Geflügelteilen in kurzer Zeit (3-8 Minuten) mit einem universell einsetzbaren Behandlungsbehälter zum Mischen und Emulgieren verschiedener Substanzen erzielt. Die Bearbeitungszeit kann durch Einsatz von kurzzeitig auf Minustemperaturen gekühltem Fleisch bzw. durch Einsatz von einer gekühlten Marinade bzw. Salzlake weiter herabgesetzt werden. Bei dieser Behandlung wird das Fleisch bei jedem Kontakt durch die Schaufel aufgehoben und wieder abgeworfen, wodurch das Fleisch bewegt wird, die Muskelfaser aufgelockert und das fleischeigene Eiweiß an die Fleischoberfläche gelangt. Dadurch verliert das Fleisch ca.12-15% weniger Feuchtigkeit, ist deutlich zarter, saftiger und gleichmäßig in jeder seiner Fasern gewürzt. Dadurch, daß die Antriebswelle für die Schaufel(n) den Boden und/oder einen Deckel des Behälters dichtend durchsetzt, wird die Adaptierbarkeit an konventionelle Küchenmaschinen erleichtert. An den Behälter selbst sind hiebei keine besonderen Anforderungen gestellt, und es können beispielsweise einfache Kunststoffschalen zum Einsatz gelangen. Bei Verwendung der Einrichtung bei höheren Drehzahlen ist ein entsprechend dichtender Deckel, welcher gegebenenfalls aus transparenten Material ausgebildet sein kann, vorzusehen, welcher über einen einfachen Verschluß mit dem Behälter verriegelt sein kann. Auf diese Weise wird das Austreten von Marinade während des Behandlungsvorganges verhindert sowie einer Verletzungsgefahr vorgebeugt, wobei gleichzeitig bei entsprechend hoher Drehzahl ein zusätzlicher Massageeffekt an der Innenseite des Deckels oder an weiteren Einbauten im Inneren des Behälter ausgenützt wird. Zu diesem Zweck sind an der Innenwand des Behälters Noppen, Rippen oder Leitflächen angeordnet, wobei vorzugsweise zusätzlich die dem Behälter zugewandte Innenseite des Deckels Fortsätze, insbesondere Noppen oder flexible Fortsätze, trägt.

Um den Massageeffekt zu verbessern und gleichzeitig beim Anheben der Fleischstücke eine Überbeanspruchung der Fleischstücke mit Sicherheit zu verhindern, ist mit Vorteil die Ausbildung so getroffen, daß die Antriebswelle im Inneren des Behälters Rillen, Noppen od.dgl., aufweist. Derartige an der Antriebswelle im Inneren der Behälters angeordnete Noppen werden mit gleicher Drehzahl wie die Schaufeln mitbewegt, sodaß eine Klemm- und Reißwirkung verhindert wird, wohl aber eine Klopfbewegung bzw. ein Massageeffekt ausgeübt werden kann.

Eine zusätzliche Verbesserung des Massageeffektes läßt sich dadurch erzielen, daß mit der Antriebswelle innerhalb des Behälters in Abstand von der bzw. den Schaufel(n) wenigstens ein radialer Arm verbunden ist, wobei mit einem derartigen radialen Arm wiederum entsprechende Fortsätze, insbesondere flexible, im wesentlichen achsparallele Fortsätze verbunden sein können. Derartige flexible, im wesentlichen achsparallele Fortsätze können beispielsweise an elastisch verbiegbaren Elementen aufgehängte Kugeln oder entsprechend stumpfe Kämme sein, wobei bei der Ausgestaltung lediglich darauf geachtet werden muß, daß eine Zerstörung der Struktur des zu behandelnden Fleisches vermieden werden soll.

Da handelsübliche Küchenmaschinen in der Regel nur eine begrenzte Auswahl von Drehzahlen ermöglichen, kann es vorteilhaft sein, die gewünschte Behandlungsdrehzahl dadurch zusätzlich zu beeinflussen, daß der Behälter mit einem vom Drehantrieb der Antriebswelle gesonderten, vorzugsweise reversierbaren, Drehantrieb verbindbar ist. Der Behälter kann hiebei bei schnell rotierenden Antriebswellen gleichsinnig mit dem Drehantrieb für die Schaufeln in Bewegung gesetzt werden, wodurch sich eine verringerte Relativbewegung zwischen Schaufeln und Boden des Behälters ergibt. Im übrigen können die Drehzahlen in Übereinstimmung mit den Gegebenheiten der angeschlossenen Küchenmaschinen den jeweiligen Erfordernissen angepaßt werden, wobei konventionelle Küchenmaschinen in der Regel wenigstens zwei oder drei Geschwindigkeitsstufen zur Verfügung stellen.

Die Erfindung wird nachfolgend anhand eines in der Zeichnung schematisch dargestellten Ausführungsbeispieles näher erläutert. In dieser zeigen Fig.1 eine schematische Darstellung eines Behälters bei abgenommenen Deckel mit am Boden des Behälters rotierbar gelagerter Schaufel, bei welcher die Antriebswelle durch den Boden durchgeführt ist, Fig.2 eine als Einsatzteil ausgebildete rotierbar gelagerte Schaufel zum Einbau in einen beliebigen Behälter, Fig.3 eine weitere Ausbildung einer als Einsatzteil ausgebildeten rotierbaren Schaufel und Fig.4 eine Draufsicht auf eine als Einsatzteil ausgebildete Schaufel.

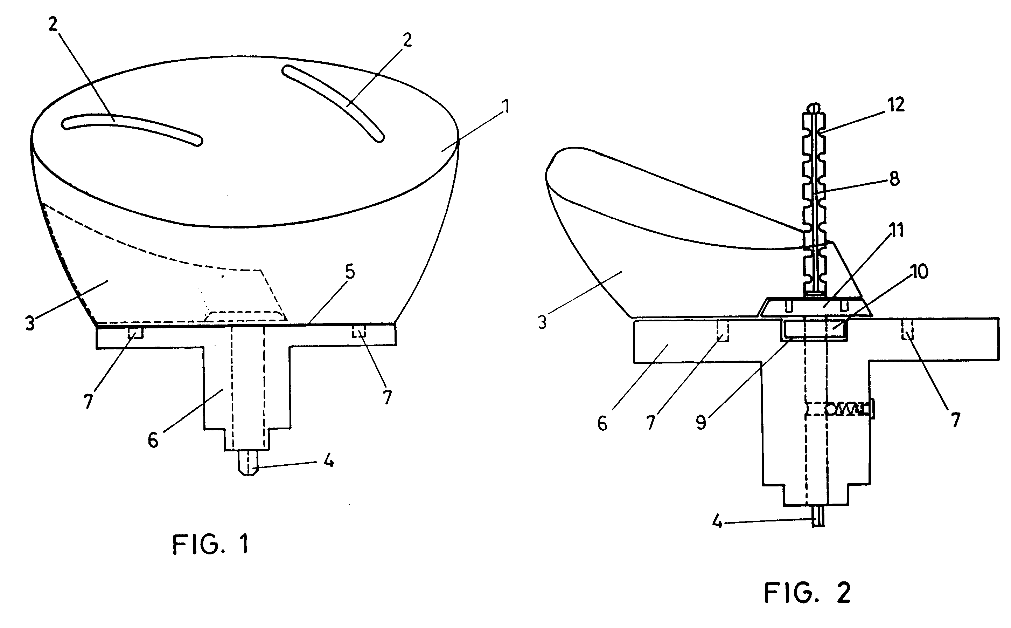

In Fig.1 ist ein Behälter zum Massieren oder Marinieren von Fleisch mit 1 bezeichnet, wobei dieser Behälter 1 an seiner Innenseite längliche Erhebungen 2 aufweist, durch welche die Massagewirkung in dem Behälter mit Hilfe der mit der Behälterinnenwand einen spitzen Winkel einschließenden Schaufel 3 verbessert werden soll. Die Schaufel 3 ist hiebei am Boden des Behälters 1 mit einem Fortsatz 4 verbunden, welcher den Boden 5 des Behälters 1 dichtend durchsetzt und welcher Fortsatz 4 für den Eingriff in den bzw. Kupplung mit dem Drehantrieb eines gängigen Haushaltsgerätes geeignet ist.

Der Behälter 1 kann an seiner Unterseite weitere Einrichtungen 6 aufweisen, welche eine entsprechend feste Verbindung des Behälters 1 mit einem gängigen Haushaltsgerät ermöglichen. Diese schematisch dargestellten Zusatzeinrichtungen können hiebei durch den Boden 5 des Behälters 1 mit Schrauben 7 bzw. Dornfortsätzen mit dem Behälter 1 verbunden sein.

In Fig.2, welche insbesondere die rotierbar gelagerte Schaufel 3 der Fig.1 präziser darstellt, sind die Bezugszeichen von Fig.1 soweit als möglich beibehalten. Die Schaufel 3 zum Anheben bzw. Wenden des Fleisches in dem Behälter 1 ist hiebei, analog wie in Fig.1 dargestellt, durch den Boden des Behälters 1 mit einem Fortsatz verbunden, welcher zum Eingriff in den Antrieb einer gängigen Küchenmaschine geeignet ist. Zusätzlich zu der Schaufel zum Anheben bzw. Wenden des Fleisches ist in Fig.2 ein Fortsatz 8 der Antriebswelle 4 vorgesehen, durch welchen eine weitere verbesserte Massage des Fleisches erzielt werden soll. Der Fortsatz 8 der Antriebswelle 4 ist hiebei in einer Vertiefung 9 der Einrichtung zum Festlegen des Behälters auf eine gängige Küchenmaschine mit einem Fuß 10 fixiert. Der Fuß 10 wird hiebei von einer Abdeckung 11 übergriffen, durch welche die Antriebswelle 4 mit der Schaufel 3 verbunden werden soll. Der Fortsatz 8 der Antriebswelle 4 weist hiebei in vorteilhafter Weise im Inneren des Massagebehälters in Umfangsrichtung des Fortsatzes 8 der Antriebswelle 4 verlaufende Rillen 12 auf, um auf diese Weise eine bessere Klopf- bzw. Massagewirkung bei dem zu behandelnden Fleisch zu erzielen.

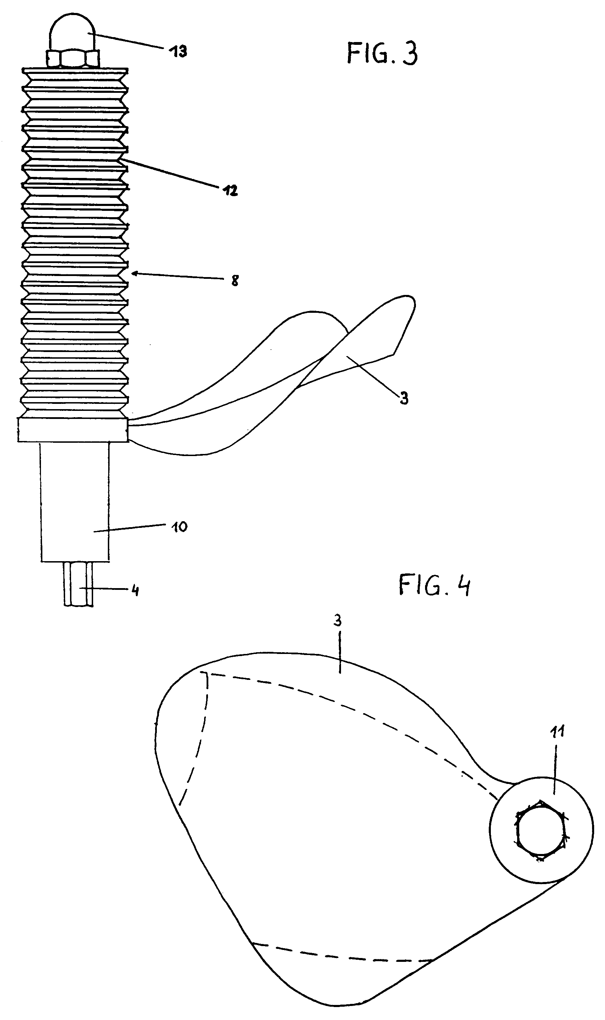

In Fig.3 ist eine andere Ausbildung einer als Einsatzteil ausgebildeten rotierbaren Schaufel 3 dargestellt. Die Schaufel weist hiebei gegenüber der Schaufel 3 von Fig.2 einen abgewandelten Querschnitt auf, auf welchem ein noch besseres Wenden der mit der Einrichtung zu behandelnden Fleischstücke in dem Behälter 1 erzielt wird. Der Fortsatz 8 in Fig.3 weist hiebei gegenüber jenem von Fig.2 eine Mehrzahl von Rillen bzw. Noppen 12 auf, und es kann durch eine derartige Ausbildung der Einrichtung insbesondere ein Klopfeffekt des zu behandelnden Fleisches erzielt werden. Mit 10 ist in Fig.3 ebenfalls schematisch der Fuß angedeutet, mit welchem der Einsatz an einer gängigen Küchenmaschine fixiert werden kann. Um während der Bearbeitung des Fleisches ein Überhitzen des zu bearbeitenden Produktes zu vermeiden, kann in den hohl ausgebildeten Fortsatz 8 der Antriebswelle 4 über den am oberen Ende des Fortsatzes 8 vorgesehenen Verschluß 13 ein Kühlmittel, wie beispielsweise Eis, eingefüllt werden, um ein Erwärmen der Einrichtung zu verhindern.

In Fig.4 ist schematische eine Draufsicht einer weiteren Ausbildung einer Schaufel 3 dargestellt, welche zum Einsatz in einem Behälter 1 gemäß der vorliegenden Erfindung geeignet ist. Auch in Fig.4 sind die Bezugszeichen der Fig.1 bis 3 beibehalten.

## Patentansprüche

1. Einrichtung zum Behandeln von frischem Fleisch und Geflügelteilen, wie z.B. Massieren oder Marinieren mit einem Behandlungsbehälter, dadurch gekennzeichnet, daß der Behälter (1) an seinem Boden (5) wenigstens eine relativ zum Behälter (1) rotierbar gelagerte Schaufel (3) aufweist, welche über eine außerhalb des Behälters angeordnete Kupplung mit einem Drehantrieb verbindbar ist und daß die Schaufel (3) unter einem spitzen Winkel an den Boden (5) des Behälters (1) anschließt, daß die Antriebswelle (4) für die Schaufel oder Schaufeln (3) den Boden (5) und/oder einen Deckel des Behälters (1) dichtend durchsetzt und daß an der Innenwand des Behälters (1) Noppen, Rippen oder Leitflächen (2) angeordnet sind.

2. Einrichtung nach Anspruch 1, dadurch gekennzeichnet, daß die Antriebswelle (4) im Inneren des Behälters (1) Rillen (12), Noppen od.dgl., aufweist.

3. Einrichtung nach Anspruch 1 oder 2, dadurch gekenn-zeichnet, daß mit der Antriebswelle (4) innerhalb des Be-hälters (1) in Abstand von der bzw. den Schaufel(n) (3) wenig-stens ein radialer Arm verbunden ist.

4. Einrichtung nach Anspruch 3, dadurch gekennzeichnet, daß mit dem oder den radialen Arm(en) flexible im wesentlichen achsparallele Fortsätze verbunden sind.

5. Einrichtung nach einem der Ansprüche 1 bis 4, dadurch gekennzeichnet, daß der Behälter (1) mit einem vom Drehantrieb der Antriebswelle (4) gesonderten, vorzugsweise reversierbaren, Drehantrieb verbindbar ist.

6. Einrichtung nach einem der Ansprüche 1 bis 5, dadurch gekennzeichnet, daß die dem Behälter (1) zugewandte Innenseite des Deckels Fortsätze, insbesondere Noppen oder flexible Fortsätze, trägt.

## Claims

1. A device for treating fresh meat and parts of poultry, such as, e.g., kneading or marinating, of the type including a treating container, characterized in that the container (1) on its bottom (5) comprises at least one blade (3) mounted so as to be rotatable relative to the container (1) and capable of being connected with a rotary drive via a coupling arranged outside of the container, and that the blade (3) follows upon the bottom (5) of the container (1) at an acute angle, that the drive shaft (4) for the blade or blades (3) sealingly passes through the bottom (5) and/or a lid of the container (1) and that nubs, ribs or guiding surfaces (2) are provided on the internal wall of the container (1).

2. A device according to claim 1, characterized in that the drive shaft (4) in the interior of the container (1) comprises grooves (12), nubs or the like.

3. A device according to claim 1 or 2, characterized in that at least one radial arm is connected with the drive shaft (4) within the container (1) at a distance from said blade(s) (3).

4. A device according to claim 3, characterized in that flexible projections having substantially parallel axes are connected with said radial arm(s).

5. A device according to any one of claims 1 to 4, characterized in that the container (1) is capable of being connected with a rotary drive separated from the rotary drive of the drive shaft (4) and preferably reversible.

6. A device according to any one of claims 1 to 5, characterized in that the internal side of the lid facing the container (1) carries projections, in particular nubs or flexible projections.

## Revendications

1. Dispositif pour le traitement de viande fraîche et de pièces de volaille tel que par exemple le malaxage ou le marinage avec un récipient de traitement, caractérisé en ce que le récipient (1) présente, sur son fond (5), au inoins une palette (3) montée à rotation par rapport au récipient (1) et susceptible d'être reliée à un entraînement en rotation, par l'intermédiaire d'un accouplement disposé à l'extérieur du récipient, et en ce que la palette (3) joint le fond (5) du récipient (1) sous un angle aigu, en ce que l'arbre d'entraînement (4) pour la palette ou les palettes (3) traverse de façon étanche le fond (5) et/ou un couvercle du récipient (1) et en ce que des picots, des nervures ou des surfaces de guidage (2) sont disposés sur la paroi intérieure du récipient (1).

2. Dispositif selon la revendication 1, caractérisé en ce que l'arbre d'entraînement (4) présente, à l'intérieur du récipient (1), des gorges (12),des picots ou analogues.

3. Dispositif selon la revendication 1 ou 2, caractérisé en ce qu'au inoins un bras radial est relié à l'arbre d'entraînement (4) à l'intérieur du récipient (1), à distance de la ou des palette(s) (3).

4. Dispositif selon la revendication 3, caractérisé en ce que des saillies flexibles, sensiblement parallèles à l'axe, sont reliées au bras radial ou aux bras radiaux.

5. Dispositif selon l'une des revendications 1 à 4, caractérisé en ce que le récipient (1) est susceptible d'être relié à un entraînement en rotation, de préférence réversible, séparé de l'entraînement en rotation de l'arbre d'entraînement (4).

6. Dispositif selon l'une des revendications 1 à 5, caractérisé en ce que la face inférieure, tournée vers le récipient (1), du couvercle porte des saillies, en particulier des picots ou des saillies flexibles.
